# EUROPEAN PATENT APPLICATION

(11) **EP 1 798 589 A1**
(43) Date of publication of application: **20.06.2007**
(21) Application number: 05790488.0
(22) Date of filing: 05.10.2005
(51) Int. Cl.: G02B 27/02, H04N 5/64

(54) **IMAGE DISPLAY UNIT AND ELECTRONIC GLASSES**

(30) Priority: 07.10.2004 JP 2004295400
(71) Applicant: Japan Science and Technology Agency, Kawaguchi-shi, Saitama 332-0012 (JP); Takahashi, Hideya, Kashiwara-shi Osaka 5820015 (JP); Shimizu, Eiji, Osaka 5691046 (JP)
(72) Inventor: Japan Science and Technology Agency, Kawaguchi-shi, Saitama 332-0012 (JP); Takahashi, Hideya, Kashiwara-shi Osaka 5820015 (JP); Shimizu, Eiji, Osaka 5691046 (JP)
(74) Representative: Hannke, Christian
(86) International application number: PCT/JP2005/018477
(87) International publication number: WO 2006/038662

(57) **Abstract**

A mobile node simulator (**100**) includes: a behavior simulator section (**140**) for simulating behaviors of a plurality of mobile nodes in accordance with a behavior model, the behavior model being definable by a user; and a network simulator section (**120**) for simulating a communication on a network including the plurality of mobile nodes. A network application (**180**) targeted for an evaluation of a simulation is implemented on the network simulator section (**120**). The network simulator section (**120**) is configured to output an output from the network application (**180**) to the behavior simulator section (**140**) at each simulation time t. The behavior simulator section (**140**) is configured to be capable of changing a behavior of at least one of the plurality of mobile nodes in accordance with the behavior model in response to the output from the network application (**180**).

## Description

### TECHNICAL FIELD

The present invention relates to: an image display apparatus for directly projecting display image light on a retina through a pupil utilizing the Maxwellian view and an electronic spectacle using the image display apparatus.

### BACKGROUND ART

Conventionally, using the principle of a pinhole camera, the Maxwellian view converges display image light with high directivity at the position of a pupil and directly projects the display image light on the retina without focusing by a crystalline lens. Since it has a deep focusing depth, even people with low vision due to the drop of the function of the crystalline lens and a cornea can view a display image in an unblurred and sharp manner with the focus being matched at the retina.

However, it is necessary to match the convergence point for the Maxwellian view with the position of the pupil which has a diameter of about 2 mm. Thus, if the convergence point of the Maxwellian view and the position of the pupil do not match each other, then it is not possible to view an image.

As an example for solving this, Reference 1 discloses a thesis reporting a result in which the reading ability of people with low vision, who use a display with a retina projection system, is measured by using a laser scan.

In Reference 1, this mobile display is fixed on a head with a head band, and this is positioned in order to match the position of the pupil of an eye, so that an image is projected on the retina from a retina projection-type display apparatus.

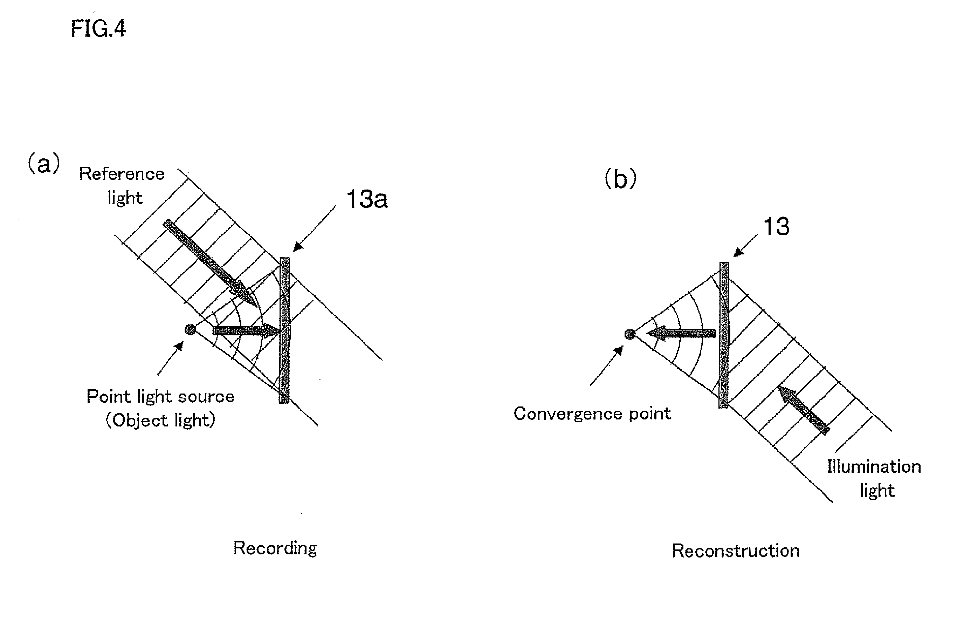

Reference 2 discloses a video supply apparatus for patient with disease utilizing the Maxwellian view. Reference 3 discloses allowing an observer to observe a video by the Maxwellian view and paragraph 0011 thereof discloses making an adjustment so as to guide the light focusing point of the video to a preferred position of an eye ball. In addition, paragraphs 0044 and 0045 of Reference 4 disclose converging a video displayed on an image board at the pupil as an image of a light source in the Maxwellian view state in an image display apparatus for projecting a video of the image board on the retina of the eye ball of the observer. Further, Reference 5 discloses a virtual face image display system having a photon polarizing device for moving a photon to be scanned so as to substantially match with the position of the pupil on the incident side. In addition, Figure 4 of Reference 5 discloses an optical system for the Maxwellian view. Further, Reference 6 discloses that video light, which is obtained as a result of the light of a light source being transmitted through a liquid crystal display panel, is supplied to an ocular optical system (Maxwellian view).
[Reference 1] Journal of Visual Impairment and Blindness, March 2004 P148 to P159; "A Comparative With a Head-mounted Laser Display and Conventional Low Vision Devices"
[Reference 2] Japanese Laid-Open Publication No. 2002-282299
[Reference 3] Japanese Laid-Open Publication No. 2005-55560
[Reference 4] Japanese Laid-Open Publication No. 2004-93769
[Reference 5] Japanese Laid-Open Publication No. 08-502372
[Reference 6] Japanese Laid-Open Publication No. 2003-167212

### DISCLOSURE OF THE INVENTION

However, in the retina projection-type display apparatus utilizing the Maxwellian view, when this display apparatus is mounted on the head with the headband and the video from the display apparatus is observed, particularly, it is difficult to guide the convergence point of the display video light to the position of the pupil due to the property which is peculiar to the display apparatus equipment.

The conventional mounting device shown in Reference 1 is integrated with the headset. When this is mounted, it is further difficult to stably fix the device at a position along a face which is a body feature peculiar to each user. This device has a mechanism having some degree of freedom for the position in three dimensions. However, together with the degree of freedom, it is necessary to fix the device. Thus, the device has an extremely complex mechanism and it also has a large-scaled structure. Moreover, it is necessary to change devices for the right eye and the left eye, thereby further requiring the time to match the convergence point for the Maxwellian view with the position of the pupil.

In addition, the following will be described again. A retina projection electronic glass, which is a display for projecting a luminous flux having an extremely deep focusing depth on the retina by utilizing the Maxwellian view and not requiring a conjugate function of an eye, is a promising vision supporting device for people with visual impairment. However, the Maxwellian view, which is used as the fundamental principle of this system, has the property that a video has to be projected on the retina through the central point of the pupil. This prevents a product that is easy to use from being realized. References 2 to 6 described above disclose image display apparatuses utilizing the Maxwellian view and all of them disclose making adjustments so as to guide the converting point, which includes image information, to the position of the pupil. However, none of them describes how to automatically perform this adjustment easily and quickly in a steady manner.

The present invention is intended to solve the problems described above. The objective of the present invention is to provide: an image display apparatus with a simple structure capable of easily and quickly match the light focusing convergence point for the Maxwellian view and the position of the pupil in a steady manner and obtaining a sharp image by the Maxwellian view; and an electronic spectacle using the image display apparatus.

An image display apparatus according to the present invention for projecting an image on a retina through a pupil of an eye by a Maxwellian view includes: a point light source; a display section for emitting a display image light from a display screen using the point light source; a light focusing section for focusing the display image light from the display section; and a light source driving section for detecting a position of the pupil and automatically moving/controlling the position of the point light source such that a light focusing convergence point for the Maxwellian view is positioned within the pupil, thereby the object described above being achieved.

An image display apparatus according to the present invention for projecting an image on a retina through a pupil of an eye by a Maxwellian view includes: a point light source; a display section for emitting a display image light from a display screen using the point light source; and two cylindrical lens sections each for focusing the display image light in one respective direction, thereby the object described above being achieved.

An image display apparatus according to the present invention for projecting an image on a retina through a pupil of an eye by a Maxwellian view includes: a point light source; a display section for emitting a display image light from a display screen using the point light source; and a lenticular lens section, having a plurality of light focusing sections arranged in an array, for focusing the display image light from the display section, thereby the object described above being achieved.

Preferably, an image display apparatus according to the present invention further includes a light source driving section for detecting a position of the pupil and automatically moving/controlling the position of the point light source such that a light focusing convergence point for the Maxwellian view is positioned within the pupil.

Still preferably, the light source driving section in an image display apparatus according to the present invention includes: a pupil detection section for detecting the position of the pupil; and a point light source moving section, in response to a detection result detected by the pupil detection section, for moving the point light source at least in an X direction and a Y direction orthogonal to each other on a surface vertical with respect to an optical axis direction such that the light focusing convergence point for the Maxwellian view and the position of the pupil match each other in two dimensions.

Still preferably, the light source driving section in an image display apparatus according to the present invention includes: a pupil detection section for detecting the position of the pupil; and a point light source moving section for moving the point light source by a predetermined amount in a random direction and from the position where the pupil is detected by the pupil detection section, fine-adjusting the position of the point light source at higher precision such that the point light focusing convergence point for the Maxwellian view is positioned at the center of the pupil.

Still preferably, the light focusing section in an image display apparatus according to the present invention is a convex lens or a holographic optical element.

Still preferably, the display section in an image display apparatus according to the present invention is a liquid crystal display section.

Still preferably, positions of focal points of the two cylindrical lens sections in an image display apparatus according to the present invention are the same or different from each other.

Still preferably, the point light source in an image display apparatus according to the present invention is at least one of a laser light generation device, a photo diode and a fluorescent light lamp or a combination of the point light source and a pinhole member.

Still preferably, the point light source and the point light source moving section in an image display apparatus according to the present invention are configured with a liquid crystal display device, the liquid crystal display device uses a combination of the point light source and a pinhole of a pinhole member as a new point light source and the liquid crystal display device can move/control the pinhole of the pinhole member.

An electronic spectacle according to the present invention uses an image display apparatus according to any one of claims 1 to 11, thereby the object described above being achieved.

An electronic spectacle according to the present invention includes: an image display apparatus according to any one of claims 1 to 11; and a video camera device capable of supplying a video signal to the image display apparatus, thereby the object described above being achieved.

An electronic spectacle according to the the present invention is preferably a portable electronic spectacle or a spectacle which can be fixed at a nose and an ear.

With the structure described above, hereinafter, the functions of the present invention will be described.

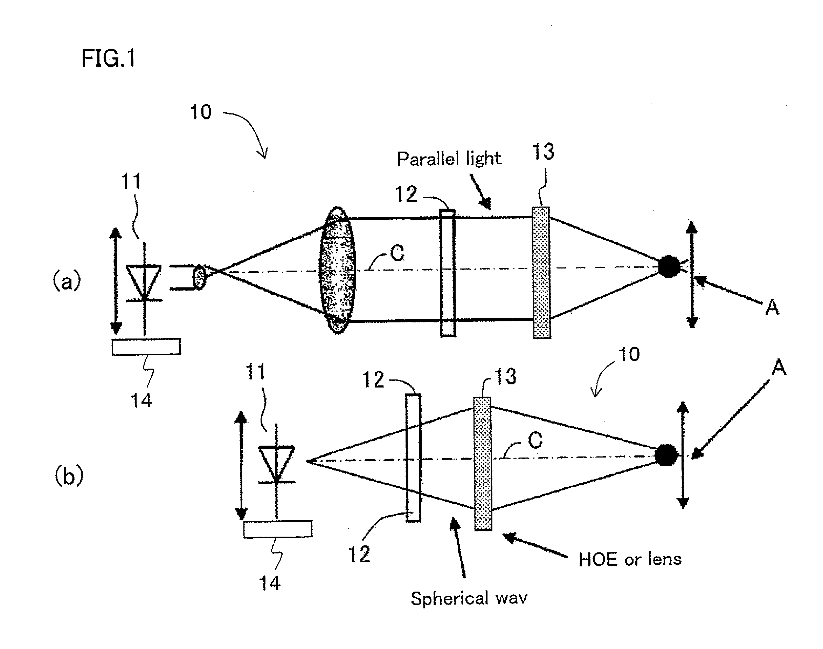

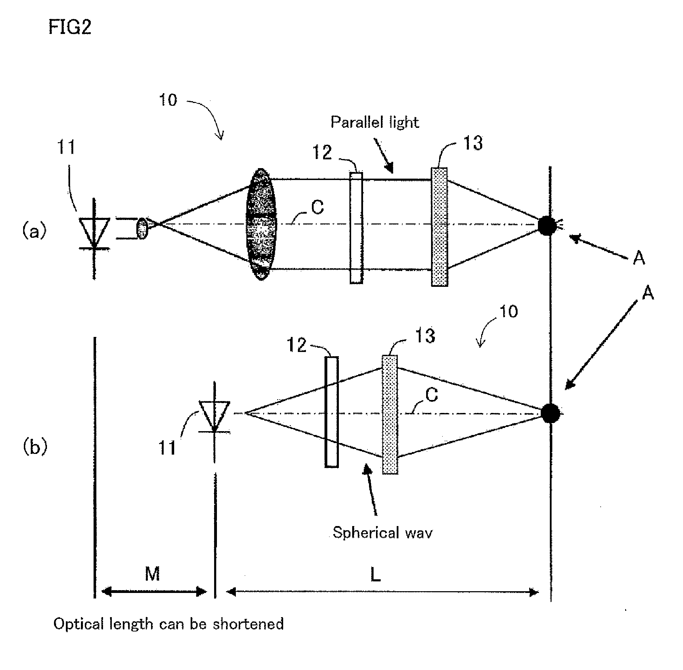

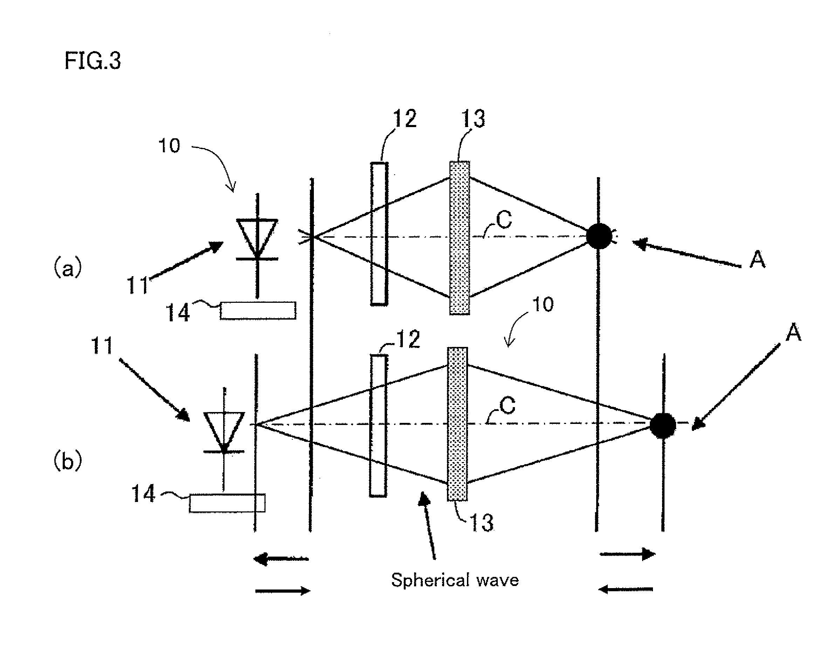

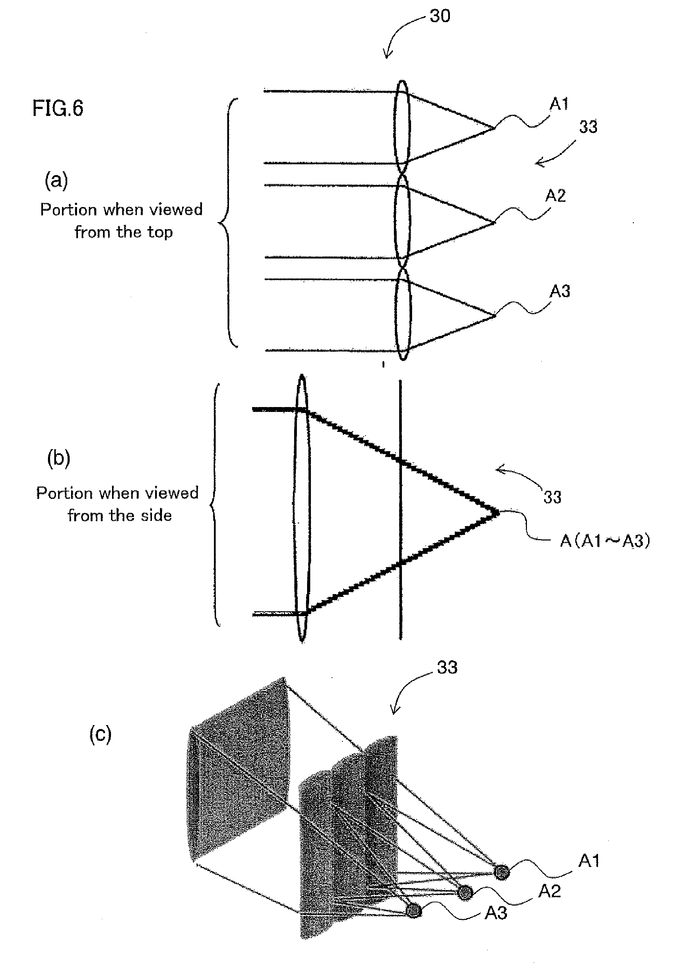

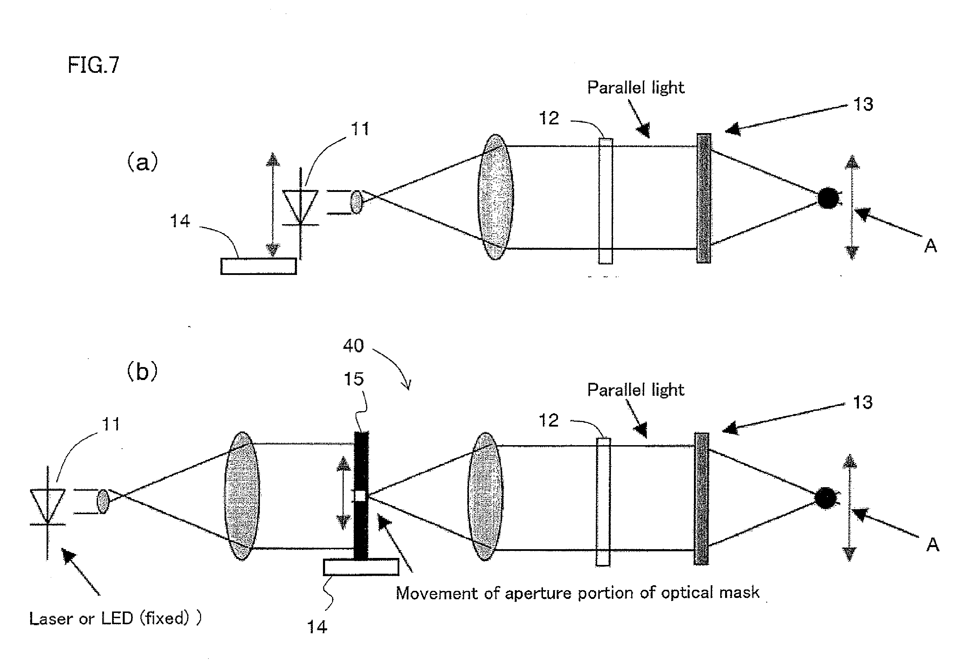

According to the present invention, (1) display image light which is incident on a light focusing section (e.g., convex lens or holographic optical element (HOE)) is not parallel light. Instead, spherical wave light is used. By automatically adjusting the position of a light source (e.g., point light source) by moving/controlling it, the position of the light focusing convergence point for the Maxwellian view can be easily and quickly adjusted in each of the front-and-rear direction, the left-and-right direction and the up-and-down direction in a steady manner (see Figures 1 and 3). Together with this, it is possible to shorten the entire length of the optical system (see Figure 2). Further, the movement/control of the position of the light source includes a method for directly moving the light source (later described in Embodiments 1 to 3) and a method for moving a pinhole for transmitting light therethrough from the light source (later described in Embodiment 4). In the latter case, the movement of the pinhole can be realized using a device, which can be easily controlled in an electronic manner, such as LCD (liquid crystal display panel) (see Figure 7).
(2) As the light incident on the light focusing section (e.g., lens or HOE), the parallel light is used, and by automatically adjusting the position of the light source (e.g., point light source) by moving/controlling it, it is possible to automatically adjust the position of the light focusing convergence point for the Maxwellian view by moving/controlling it in the left-and-right direction and the up-and-down direction.
(3) Two cylindrical lens sections are each used for converging light in only one respective light focusing convergence line. By combining the two cylindrical lens sections such that the light focusing convergence lines cross each other at a right angle, it is possible to realize the convergence lines (convergence lines in a crossed state) which are equivalent to the conventional convergence point for the Maxwellian view. When this method is used, it is possible to shift the convergence line of the display image light in the optical axis direction in the two directions orthogonal to each other (longitudinal direction and lateral direction) (focusing depth) (depth difference **N** in Portion **(c)** of Figure **4**). Thus, in a wide range of this deep focusing depth (depth difference **N**) (excellent up to 5 mm in an experiment), it is possible to obtain an effect equivalent to the conventional convergence point for the Maxwellian view. Also, it is possible to observe an unblurred sharp image even with the insertion of a lens of +20D. In addition, to realize this, in the case of the cylindrical lens, two cylindrical lenses are required, but in the case of the HOE, only one HOE is required.
(4) It is possible to easily realize a plurality of convergence points by combining cylindrical lenses or lenticular lenses (or sheets) in a vertical direction (or/and horizontal direction) to each other. Especially, when the plurality of convergence points is realized with the HOE, conventionally, it is necessary to perform a plurality of capturing in order to manufacture a single convergence point and perform multiple exposures. However, with this method, since it is possible to manufacture the HOE having the plurality of convergence points with one capturing, it is possible to use a photopolymer as a sensitive material, which is not suited for multiple exposures, although it has many advantages as the sensitive material (see Figure 6) for the HOE.

In a retina projection electronic glass, which is a display for projecting a luminous flux having an extremely deep focusing depth on the retina by utilizing the Maxwellian view and not requiring a conjugate function of an eye, as a section for easily performing an automatic adjustment in regard to a mechanism for an interface portion with an eye socket in order to match the position of the pupil and the convergence point including image information, instead of moving the entire optical system, a section for moving a light source or a pinhole portion which is a part of the optical system, a section for realizing the Maxwellian view in a new form using two cylindrical lenses and a section for realizing a plurality of convergence points using lenticular lenses are obtained. In addition, if the HOE is used as the light focusing section, the display can be lightweight and highly functional, which results in a further excellent display.

In this manner, the light focusing convergence point A for the Maxwellian view and the position of the pupil are easily and quickly matched in a steady manner and thus it is possible to view a sharp image by the Maxwellian view.

In addition, an electronic spectacle including the image display apparatus according to the present invention described above and a video camera apparatus capable of supplying a video signal to this image display apparatus is obtained, so that the effect of the present invention described above is obtained. The present invention can be lightweight and compact. Thus, if the electronic spectacle is set up as a normal glass-type spectacle which allows the fixation at a nose and an ear, this can be handsfree. Accordingly, this is promising for further visual support for people with visual impairment.

In this manner, according to the present invention, the convergence point **A** for the Maxwellian view and the position of the pupil can be easily and quickly matched to each other in a steady manner and thus it is possible to view a sharp image by the Maxwellian view: by automatically adjusting the position of the convergence point, for example, at least in the left-and-right direction and the up-and-down direction among the front-and-rear direction, the left-and-right direction and the up-and-down direction; on the vertical converging line **A**_{V} and the horizontal converging line **A_{H}** in a crossed state or within the range of the depth difference **N** of the vertical converging line **A**_{V} and the horizontal converging line **A**_{H} by the two cylindrical lens sections; or by using the plurality of convergence points by the lenticular lenses.

### BRIEF DESCRIPTION OF THE DRAWINGS

Figure **1** is a configurational diagram showing an example of an image display apparatus according to Embodiment 1 of the present invention; Portion **(a)** of Figure **1** is a top view showing a state in which parallel light is incident on a liquid crystal display; and Portion **(b)** of Figure **1** is a top view showing a state in which a point light source is moved in the left-and-right direction so as to adjust the position of a light focusing convergence point.
   Portion **(a)** of Figure **2** is a configurational diagram showing a case when parallel light is incident on the liquid crystal display; and Portion **(b)** of Figure **2** is a configurational diagram showing a case when spherical wave light is incident on the liquid crystal display in the image display apparatus in Figure 1
Figure **3** is a configurational diagram showing an example of an image display apparatus according to Embodiment 1 of the present invention; Portion **(a)** of Figure **3** is a top view showing a state in which the position of the convergence point is adjusted by positioning the point light source forward; and Portion **(b)** of Figure **3** is a top view showing a state in which the position of the convergence point is adjusted by positioning the point light source further behind the state of Portion **(a)** of Figure **3.**
   Portions **(a)** and **(b)** of Figure **4** are diagram for describing a method for manufacturing a holographic optical element (HOE) used in the present invention.

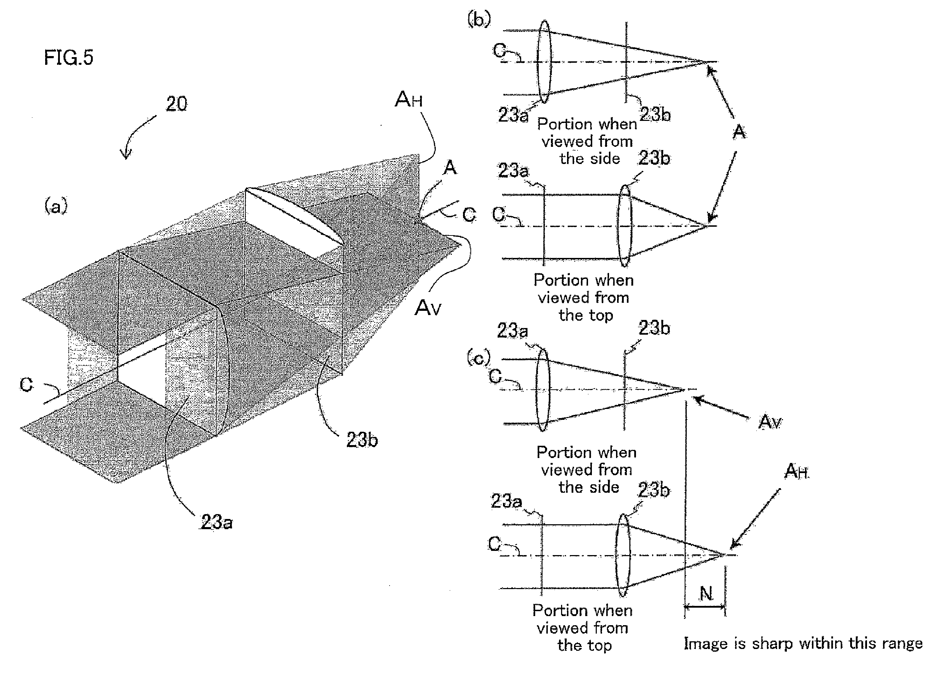

Figure **5** is a configurational diagram showing an example of a lens portion of an image display apparatus according to Embodiment 2 of the present invention; Portion **(a)** of Figure **5** is a perspective view of the lens portion; Portion **(b)** of Figure **5** is a side view and a top view of the lens portion when the focusing depths of the convergence points are the same to each other in a vertical direction and a horizontal direction; and Portion **(c)** of Figure **5** is a side view and a top view of the lens portion when the focusing depths of the convergence points are different from each other in the vertical direction and the horizontal direction.
Figure **6** is a configurational diagram showing an example of a lens portion of an image display apparatus according to Embodiment 3 of the present invention; Portion **(a)** of Figure **6** is a top view of the lens portion; Portion **(b)** of Figure **6** is a side view of the lens portion; and Portion **(c)** of Figure 6 is a perspective view of the lens portion.
Figure **7** is a configurational diagram showing an example of each of the image display apparatuses according to Embodiments 1 and 4 of the present invention; Portion **(a)** of Figure **7** is a top view showing a state in which parallel light is incident on the liquid crystal display of the image display apparatus according to Embodiment 1 of the present invention; and Portion **(b)** of Figure **7** is a top view showing a state in which the position of the convergence point is adjusted by moving the pinhole of the image display apparatus according to Embodiment 4 of the present invention in the left-and-right direction (and/or up-and-down direction), instead of moving the point light source.

- **10, 20, 30 40**: image display apparatus
- **11**: point light source
- **12**: liquid crystal display
- **13**: convex lens (or HOE)
- **14**: light source driving apparatus
- **15**: pinhole member
- **23a, 23b**: cylindrical lens
- **33**: lenticular lens (or cylindrical lens)
- **A**, **A1** to **A3**: light focusing point
- **Aᵥ**, **A_{H}**: light focusing line

### BEST MODE FOR CARRYING OUT THE INVENTION

Hereinafter, cases in which Embodiments 1 to 4 of image display apparatuses according to the present invention are applied to a projection-type liquid crystal display apparatus will be described with reference to the accompanying drawings.

### (Embodiment 1)

Embodiment 1 will describe a case in which the position of a convergence point of spherical wave converging light (or parallel light) is automatically adjusted in the left-and-right direction and the up-and-down direction.

Figure **1** is a configurational diagram showing an example of a projection - type liquid crystal display apparatus according to Embodiment 1 of the present invention. Portion **(a)** of Figure **1** is a top view showing a state in which parallel light is incident on a liquid crystal display. Portion **(b)** of Figure **1** is a top view showing a state in which a point light source is moved in the left-and-right direction so as to adjust the position of a light focusing convergence point.

In Portions **(a)** and **(b)** of Figure **1,** an image display apparatus **10** according to Embodiment 1 includes: a point light source **11;** a liquid crystal display **12** as a liquid crystal display section for emitting display image light from a display screen using the point light source **11;** a convex lens **13** as a light focusing section for focusing the display image light from the liquid crystal display 12; and a light source driving apparatus **14** as a light source driving section for detecting the position of a pupil and automatically moving/controlling the position of the point light source **11** such that the light focusing convergence point A for the Maxwellian view is positioned within the pupil. The image display apparatus according to Embodiment 1 can project a display image on a retina through the pupil of an eye by the Maxwellian view.

As the point light source **11,** a white light emitting diode (white LED) or a laser apparatus with high luminance is used. Regarding the white LED, when each light from a red LED, a green LED and a blue LED are mixed, white light is obtained. Thus, these LED of the three primary colors can be used.

The liquid crystal display **12** is a transmissive projection-type color liquid crystal display (color LCD). An image signal from a video camera device or the like is supplied to the color LCD by a liquid crystal display control apparatus (not shown) so as to perform a display control, such that a desired image is displayed on a display screen of the color LCD. In this case, the point light source **11** is disposed behind the liquid crystal display **12** and used as a backlight.

The convex lens 13 is used to focus the display image light from the liquid crystal display **12** for retina projection so as to position the light focusing convergence point **A** at a predetermined position within the pupil. Instead of the convex lens **13,** a holographic optical element (HOE) can be used as the light focusing section. If the HOE made of film is used, a lens surface can be formed more easily (the same property as that of a free-form surface can be easily made) than a plastic lens or a glass lens, and the weight of the HOE made of film is much less than that of the plastic lens or glass lens.

The light source driving apparatus **14** includes: a pupil detection section as a position sensor for detecting the position of the pupil (movement of the pupil); and a motor and X-Y table section (not shown) as a point light source moving section, in response to a detection result detected by the pupil detection section, for moving the point light source **11** in the left-and-right direction and the up-and-down direction (X-Y direction) on a surface perpendicular to an optical axis direction C (front-and-rear direction) such that the light focusing convergence point **A** for the Maxwellian view and the position of the pupil match each other in two dimensions. The point light source moving section can randomly and roughly move the point light source **11** and from the position where the pupil is detected, fine-adjust the position of the point light source 11 at higher precision such that the light focusing convergence point A for the Maxwellian view is positioned at the center of the pupil.

With the structure described above, first, the position of the pupil of an eye of a user is detected by the position sensor as the pupil detection section. Based on the detected position of the pupil of the eye of the user, the point light source moving section moves the position of the point light source **11** at the light source driving apparatus **14** in the left-and-right direction (arrowdirection in Portions **(a)** and **(b)** of Figure **1**) and the up-and-down direction (arrow direction when Portions **(a)** and **(b)** of Figure **1** are viewed from the side) when viewed from the front of the figure (when viewed from top view) such that the light focusing convergence point **A** for the Maxwellian view and the position of the pupil match each other in the two dimensions. Together therewith, the light focusing convergence point **A** for the Maxwellian view is also moved in the left-and-right direction and the up-and-down direction. As described above, when the position of the point light source **11** is moved at the light source driving apparatus **14** in the left-and-right direction and the up-and-down direction in the two dimensions, in accordance therewith, the light focusing convergence point **A** by the convex lens **13** for the display image light of the liquid crystal display **12** is also moved such that the focusing light convergence point **A** for the Maxwellian view and the position of the pupil match each other in the two dimensions. When the light focusing convergence point **A** by the convex lens **13** for the display image light of the liquid crystal display **12** is positioned within the pupil, then a retinal projection is performed by the Maxwellian view. Thus, it is possible for a user to view a sharp display image.

In this manner, when the position of the point light source **11** is automatically adjusted by the light source driving apparatus **14** using the parallel light as shown in Portion **(a)** of Figure **1** as the display image light incident on the convex lens **13** (or HOE) or using the spherical wave light instead of the parallel light as shown in Portion **(b)** of Figure **1,** the position of the light focusing convergence point **A** for the Maxwellian view with respect to the position of the pupil is easily and quickly adjusted in a steady manner. Further, as with an optical path length **L** of the entire optical system, as shown in Portion **(b)** of Figure **2,** which uses the spherical wave light, it is possible to shorten the entire optical system by distance **M** when compared to the case, shown in Portion **(a)** of Figure **2,** which uses the parallel light. Similar to the use of the lens, also in the case when the HOE is used, the parallel light is conventionally used as the light for reproducing the HOE. However, with the use of the spherical wave light, it is possible to shorten the entire optical system.

Embodiment 1 has described the case in which by moving the point light source **11** in a direction perpendicular to the optical axis, the position of the light focusing convergence point **A** for the spherical converging light is adjusted on a surface in the direction perpendicular to the optical axis (e.g., left-and-right direction and up-and-down direction) (in the cases of both parallel light or spherical wave light). However, the present invention is not limited to this. With the addition of a mechanism for driving the point light source **11** in the optical axis direction **C** (front-and-rear direction; only in the case of the spherical wave light) to the light source driving apparatus **14,** when the position of the point light source **11** is moved at the light source driving apparatus **14** in the optical axis direction **C** (e.g., arrow directions in Portion **(b)** of Figure **3**), it is possible to automatically adjust the position of the light focusing convergence point **A** with respect to a depth position of an eye (position of the pupil) by moving the position of the light focusing convergence point **A** of the spherical converging light (display image light) in the front-and-rear direction (optical axis direction **C**) so as to move the convergence point closer to or farther from the pupil.

In addition, as the display image light incident on the convex lens **13** (or HOE), the spherical wave light can be used instead of the parallel light, or the parallel light can be used. In the case when the parallel light is used as the display image light incident on the convex lens **13,** by adjusting the position of the point light source **11** in the left-and-right direction and the up-and-down direction, it is possible to adjust the position of the light focusing convergence point **A** for the Maxwellian view in the left-and-right direction and the up-and-down direction. In the case when the parallel light is used as the display image light incident on the convex lens **13** (or HOE) from the liquid crystal display **12,** it is not possible to adjust the position of the light focusing convergence point **A** in the front-and-rear direction.

Further, no specific description is given in Embodiment 1. Herein, a method for manufacturing the HOE described above will be briefly described. The HOE is an optical element, which is realized using the holography technique, so as to have a property similar to an optical element such as a lens. This HOE is called a holographic optical element. Figure **4** shows a principle for realizing a simple lens with the HOE. Portion **(a)** of Figure **4** shows a state in which spherical wave light from a point light source is recorded on a hologram recording material **13a.** When reproduction light is irradiated on the HOE (light focusing section **13;** hologram) recorded in the manner as shown in Portion **(b)** of Figure **4,** then the point light source which was used at the time of recording is reproduced. In other words, the function of a convex lens for converging parallel light at one point is realized. With this method, the HOE used in the present invention is manufactured.

### (Embodiment 2)

Embodiment 2 will describe a case in which light focusing converging lines other than the spherical converging light is used having the shape of a convergence point being contrived.

Figure **5** is a configurational diagram showing an example of a lens portion of an image display apparatus according to Embodiment 2 of the present invention. Portion **(a)** of Figure **5** is a perspective view of the lens portion. Portion **(b)** of Figure **5** is a side view and a top view of the lens portion when focusing depths of the light focusing converging lines are the same to each other in a vertical light focusing direction and a horizontal light focusing direction. Portion **(c)** of Figure **5** is a side view and a top view of the lens portion when the focusing depths of the light focusing converging lines are different from each other in the vertical light focusing direction and the horizontal light focusing direction. Members for obtaining the same working effect as those shown in Figures **1** and **2** are denoted with the same reference numbers, and the description thereof will be omitted.

In Figure **5,** the image display apparatus **20** according to Embodiment **2** includes: the point light source **11;** the liquid crystal display **12** as a liquid crystal display section for emitting display image light from a display screen thereof using the point light source **11;** a cylindrical lens **23a** and a cylindrical lens **23b** as two cylindrical lens sections, each of which is a "semi-cylindrical lens" for focusing light in respective one direction.

The cylindrical lens **23a** and the cylindrical lens **23b** are disposed with a predetermined interval therebetween so as to make the convex shape of the cross-sectional view of the cylindrical lens **23a** and the cylindrical lens **23b** perpendicular in the longitudinal direction such that the cylindrical lens **23a** and the cylindrical lens **23b** respectively focuses the display image light from the liquid crystal display **12** so as to position the light focusing convergence point **A** (vertical light focusing direction converging line **Aᵥ** and horizontal light focusing direction converging line **A_{H}**) within the pupil. When the vertical light focusing direction converging line **Aᵥ** and the horizontal light focusing direction converging line **A_{H}** match each other (see Portion **(b)** of Figure **5**), that matching point is the light focusing convergence point **A.** Thus, the display image can be clearly seen on the vertical light focusing direction converging line **A**_{V} and the horizontal light focusing direction converging line **A**_{H} in a crossed state, and it is possible to view the clearest video at the light focusing convergence point **A** which is a crossed point. When the focusing depths of the vertical light focusing direction converging line **A**_{V} and the horizontal light focusing direction converging line **A_{H}** do not match each other and are different from each other (see Portion **(c)** of Figure **5**), then a video have a sharp view within a range of depth difference **N** in the optical axis direction **C** of the vertical light focusing direction converging line **A**_{V} and the horizontal light focusing direction converging line **A**_{H}. Within the range of this depth difference **N,** a relatively clear image can be viewed if no as clear as in the case of the light focusing convergence point **A** for the Maxwellian view.

With the structure described above, the display image light from the liquid crystal display **12** is focused in a longitudinal direction (up-and-down direction) by the cylindrical lens **23a,** and the display image light from the liquid crystal display **12** is focused in a lateral direction (left-and-right direction) by the cylindrical lens **23b.** Thus, when the light focusing convergence point **A** for the Maxwellian view, in which the vertical light focusing direction converging line **A**_{V} and the horizontal light focusing direction converging line **A_{H}** match each other, is positioned within the pupil, an image can be clearly viewed. An image can be relatively clearly viewed even on the vertical light focusing direction converging line **Aᵥ** and the horizontal light focusing direction converging line **A_{H}** in a crossed state. When the focusing depths of the vertical light focusing direction converging line **A**_{V} and the horizontal light focusing direction converging line **A**_{H} do not match each other and are different from each other, an image can be viewed relatively clearly within a range of depth difference **N** in the optical axis direction **C** of the vertical light focusing direction converging line **A**_{V} and the horizontal light focusing direction converging line **A**_{H}.

As described above, the two cylindrical lens **23a** and cylindrical lens **23b** are combined so as to be perpendicular to each other and the convergence point of each thereof can be independently determined. When the convergence points of both cylindrical lens **23a** and cylindrical lens **23b** match each other, the convergence point thereof is equivalent to that of the conventional art. However, when the convergence points of the two lenses are intentionally shifted from each other, then it is possible to obtain an effect, similar to the one obtained by Maxwellian view, between the convergence points of the two lenses. In the case when there is a shift of about 5 mm between the two convergence points, this effect has been confirmed even if a lens with 20 dioptre is used (corresponding to severe myopia). Such two lenses can be used to achieve such an effect. However, if a HOE is used, the effect can be realized with one HOE. It is possible to burn on one HOE the function which is equivalent to an optical system using two lenses.

In this manner, with the cylindrical lens 23a and the cylindrical lens **23b,** it is possible to change the focusing depth in the vertical direction (up-and-down direction) and the horizontal direction (left-and-right direction) . It is possible to suppress the blurriness within the range having different focusing depths (depth difference **N**) and match the light focusing convergence point **A** and the position of the pupil relatively well.

### (Embodiment 3)

Embodiment 3 will describe a case in which a plurality of convergence points of lenticular lenses, cylindrical lenses and the like are used.

Figure **6** is a configurational diagram showing an example of a lens portion of an image display apparatus according to Embodiment 3 of the present invention. Portion **(a)** of Figure **6** is a top view of the lens portion. Portion **(b)** of Figure **6** is a side view of the lens portion. Portion **(c)** of Figure **6** is a perspective view of the lens portion. Members for obtaining the same working effect as those shown in Figures **1** and **2** are denoted with the same reference numbers, and the description thereof will be omitted.

In Portions **(a)** and **(b)** of Figure **6**, an image display apparatus **30** according to Embodiment 3 includes: the point light source **11,** the liquid crystal display **12;** and a lenticular lens section (lenticular lens **33)** as a plurality of light focusing sections. As the lenticular lens section, a cylindrical lens **33** shown in Portion **(c)** of Figure **6** can be used instead of the lenticular lens 33 in order to obtain a plurality of light focusing points **A.** When the cylindrical lens **33** shown in Portion **(c)** of Figure **6** is used, one of the cylindrical lenses is made up of one lens, the other cylindrical lens is made of a plurality of lenses arranged in an array.

In the lenticular lens **33,** a plurality of convex lenses is provided in an array and in a sheet in a continuous manner. The lenticular lens **33** is used such that image light from the liquid crystal display **12** is focused on a plurality of points (here, three) and one convergence point **A** is always positioned within the pupil. The adjacent distance between each of the plurality of convergence points **A** (**A1** to **A3**) of these convex lenses is preferably to be the diameter of the pupil or slightly smaller than that. Herein, the adjacent distance is 1.5 mm to 2.0 mm. When this adjacent distance is smaller than 1.5 mm, then there is a possibility that there are two convergence points A existing within the pupil. Thus, the image projected on the retina is viewed in an overlapping manner. When the adjacent distance is greater than 2.0 mm, then there occurs a case in which no convergence point **A** exists within the pupil when the pupil is moved. Thus, there occurs a case in which an image by the Maxwellian view is not projected on the retina.

With the structure described above, the image light from the liquid crystal display **12** is focused by each of the plurality of convex lenses of the lenticular lens **33**, and the plurality of convergence points **A1** to **A3** is obtained. The pitch between each of the converging points **A1** to **A3** is substantially equal to the diameter of the pupil. Thus, one convergence point **A** can always be positioned within the pupil. Accordingly, any one of the convergence points A1 to **A3** for the Maxwellian view and the position of the pupil can be easily and stably matched with each other and thus it is possible to view an excellent image by the Maxwellian view.

In this manner, the lenticular lens **33** (lenticular sheet) or the cylindrical lens **33** is disposed in the direction perpendicular to the other lenticular lens. As a result, it is possible to realize the plurality of convergence points **A1** to **A3** (here, three). Especially, in the case when a plurality of convergence points is realized with the HOE, if this method is used, then it is possible to manufacture the HOE with one capturing as described above. Therefore, this is effective even if a photopolymer is used as a sensitive material. In Embodiment 3, the two cylindrical lens at the front and the rear are combined and thus the plurality of convergence points **A** can be simultaneously obtained (here, three) as shown in a three dimensional view of Portion **(c)** of Figure **6**. However, this can be realized with one HOE in the case of the HOE. In the case of realizing with the HOE, a recording is made one at a time at each point, and it is possible to realize a plurality of convergence points with multiple recordings when a sensitive material made of silver salt is used. However, it is difficult to realize with a photopolymer. The reason for this is because it is not possible to perform multiple recordings thereon due to the property of the photopolymer material. However, in the optical system shown in Portion **(c)** of Figure **6,** when a plurality of convergence points is made on the HOE with one recording, the photopolymer can also be used. Due to the utilization efficiency of the light and the easy handling of the material, it is significantly advantageous to use the photopolymer material rather than using the sensitive material made of silver salt.

### (Embodiment 4)

Embodiment 1 has described the case in which by moving the position of the light source **11** at the light source driving apparatus **14** at least in each of the left-and-right direction and the up-and-down direction among each of the left-and-right direction, the up-and-down direction and the front-and-rear direction, the position of the light focusing point A for the Maxwellian view is moved at least in each of the left-and-right direction and the up-and-down direction so as to automatically adjust the position of the light focusing point A to match the position of the pupil. However, instead of the method for directly moving the light source **11**, Embodiment 4 will describe a method for moving a pinhole, which transmits light therethrough from the light source **11**, at the light source driving apparatus **14** in order to move/control the position of the light source.

Figure **7** is a configurational diagram showing an example of each of the image display apparatuses according to Embodiments 1 and 4 of the present invention. Portion **(a)** of Figure **7** is a top view showing a state in which parallel light is incident on the liquid crystal display of the image display apparatus according to Embodiment 1 of the present invention. Portion **(b)** of Figure **7** is a top view showing a state in which the position of the convergence point is adjusted by moving the pinhole of the image display apparatus according to Embodiment 4 of the present invention in the left-and-right direction, instead of moving the point light source. Members for obtaining the same working effect as those shown in Figures **1** and **2** are denoted with the same reference numbers, and the description thereof will be omitted.

In Portions **(b)** of Figure **7,** an image display apparatus **40** according to Embodiment 4 includes: the point light source **11;** a liquid crystal display **12** as a liquid crystal display section for emitting display image light from a display screen thereof using the point light source **11;** the convex lens **13** as a light focusing section for focusing the display image light thereof from the liquid crystal display **12;** a light source driving apparatus **14** as a light source driving section for detecting the position of a pupil and automatically moving/controlling the position of the light source, which is the position of a pinhole instead of the point light source **11,** such that the light focusing convergence point **A** for the Maxwellian view is positioned within the pupil; and a pinhole member **15** capable of forming the pinhole. The image display apparatus **40** according to Embodiment 4 can project a display image, the position of which is automatically adjusted, on a retina through the pupil of an eye by the Maxwellian view.

The pinhole member **15** can be an optical mask having a pinhole capable of transmitting a portion of the light from the point light source **11** therethrough. In this case, the light source driving apparatus **14** moves the optical mask having the pinhole in order to match the position of the pupil and the light focusing point **A.** The position of the optical mask becomes the position of the point light source **11.** With the use of a liquid crystal display device (LCD) as a device for realizing the point light source moving section for the optical mask and the point light source driving apparatus **14,** it is possible to easily and accurately control the position of the light source (the position of an opening portion of the optical mask) in an electronic manner without a movable portion. This liquid crystal display device (LCD) uses the combination of the point light source **11** and the pinhole member **15** in the image display apparatus according to the present invention as a new point light source and it can move/control the pinhole (opening hole) of the pinhole member **15** as the point light source moving section.

In Portion **(b)** of Figure **7,** the parallel light is used. However, the present invention is not limited to this. Even with the use of spherical wave light, an effect of automatically adjusting the position of the pupil and the light focusing point **A** can be obtained. In addition, in Embodiment 4, when the liquid crystal display device (LCD) is used for the pinhole (opening portion) and for the movement/control thereof, the movement/control thereof is a movement in a perpendicular direction with respect to an optical axis. Thus, it is necessary to have a movable portion in order to move the pinhole in the optical axis direction (front-and-rear direction). Further, also in this case, instead of the convex lens **13,** the HOE described in Embodiments 1 to 3 can be used as the light focusing section. Also, Embodiment 4 can be applied to the contrivance of the shape of the convergence point using the two cylindrical lenses in Embodiments 2 and 3 described above or can be applied to a method for realizing a plurality of convergence points using lenticular lenses, cylindrical lenses or the like.

No specific description is given in Embodiments 1 to 4 described above. However, the image display apparatuses **10, 20, 30** and **40** described above can be applied to an electronic spectacle. This electronic spectacle can mount a video camera device or the like and it can also supply an image signal from an externally-provided image signal generation device (e.g., video camera device, television device, monitoring device and the like) to the liquid crystal display **12** so as to obtain a desired image. The convergence point **A** by the Maxwellian view for the image light from the liquid crystal display **12** is positioned in each pupil of both eyes, so that a sharp image by the Maxwellian view can be viewed by both eyes. In this case, the convergence point **A** for the Maxwellian view and the position of the pupil can be easily and stably matched to each other and thus it is possible to view a sharp image by the Maxwellian view with an excellent quality: by automatically adjusting the position of the convergence point **A** of the spherical converging light in the left-and-right direction and the up-and-down direction in Embodiment 1; on the converging lines **A**_{V} and **A**_{H} in the crossed state or within the range of the depth difference **N** of the converging lines **A**_{V} and **A**_{H} formed by focusing the light in one direction (up-and-down direction) by the cylindrical lens 23a and focusing the light in the other direction (left-and-right direction) by the cylindrical lens 23b in Embodiment 2; and by using the plurality of convergence points **A1** to **A3** of the lenticular lens **33** in Embodiment 3.

The electronic spectacle can be portable or fixed, or can be for one eye or both eyes. The portable electronic spectacle only needs to have a portion to be held by hand, whether or not it has a grip portion.

The present invention can be lightweight and compact. The electronic spectacle can be set up as a glass-type spectacle instead of the portable-type spectacle described above. Thus, the electronic spectacle can be handsfree. Accordingly, this is promising for further visual support for people with visual impairment.

In addition, no specific description is given in Embodiments 2 and 3. However, the light source driving apparatus **14** can be provided.

As described above, the present invention is exemplified by the use of its preferred Embodiments 1 to 4. However, the present invention should not be interpreted solely based on the present Embodiments 1 to 4. It is understood that the scope of the present invention should be interpreted solely based on the claims. It is also understood that those skilled in the art can implement equivalent scope of technology, based on the description of the present invention and common knowledge from the description of the detailed preferred Embodiments 1 to 4 of the present invention. Furthermore, it is understood that any patent, any patent application and any references cited in the present specification should be incorporated by reference in the present specification in the same manner as the contents are specifically described therein.

### INDUSTRIAL APPLICABILITY

According to the present invention, in a field of: an image display apparatus for directly projecting display image light on a retina through a pupil utilizing the Maxwellian view and an electronic spectacle using the image display apparatus, the light focusing point for the Maxwellian view and the position of the pupil can be easily and stably matched to each other and thus it is possible even for people with low vision to view an image with an excellent quality by the Maxwellian view with a simple structure. In addition, this can be applied to an electronic spectacle. This electronic spectacle can mount a video camera device or the like and it can also supply an image signal from an externally-provided image signal generation device (e.g., video camera device, television device, monitoring device and the like) supplied to a trasmissive projection-type liquid crystal display device (e.g., liquid crystal display) so as to obtain a desired image.

## Claims

1. An image display apparatus for projecting an image on a retina through a pupil of an eye by a Maxwellian view, comprising:
a point light source;
a display section for emitting a display image light from a display screen using the point light source;
a light focusing section for focusing the display image light from the display section; and
a light source driving section for detecting a position of the pupil and automatically moving/controlling the position of the point light source such that a light focusing convergence point for the Maxwellian view is positioned within the pupil.

2. An image display apparatus for projecting an image on a retina through a pupil of an eye by a Maxwellian view, comprising:
a point light source;
a display section for emitting a display image light from a display screen using the point light source; and
two cylindrical lens sections each for focusing the display image light in one respective direction.

3. An image display apparatus for projecting an image on a retina through a pupil of an eye by a Maxwellian view, comprising:
a point light source;
a display section for emitting a display image light from a display screen using the point light source; and
a lenticular lens section, having a plurality of light focusing sections arranged in an array, for focusing the display image light from the display section.

4. An image display apparatus according to claim 2 or 3, further comprising
a light source driving section for detecting a position of the pupil and automatically moving/controlling the position of the point light source such that a light focusing convergence point for the Maxwellian view is positioned within the pupil.

5. An image display apparatus according to claim 1 or 4, wherein the light source driving section includes: a pupil detection section for detecting the position of the pupil; and a point light source moving section, in response to a detection result detected by the pupil detection section, for moving the point light source at least in an X direction and a Y direction orthogonal to each other on a surface vertical with respect to an optical axis direction such that the light focusing convergence point for the Maxwellian view and the position of the pupil match each other in two dimensions.

6. An image display apparatus according to claim 1 or 4, wherein the light source driving section includes: a pupil detection section for detecting the position of the pupil; and a point light source moving section for moving the point light source by a predetermined amount in a random direction and from the position where the pupil is detected by the pupil detection section, fine-adjusting the position of the point light source at higher precision such that the point light focusing convergence point for the Maxwellian view is positioned at the center of the pupil.

7. An image display apparatus according to claim 1 or 3, wherein the light focusing section is a convex lens or a holographic optical element.

8. An image display apparatus according to any one of claims 1 to 3, wherein the display section is a liquid crystal display section.

9. An image display apparatus according to claim 2, wherein positions of focal points of the two cylindrical lens sections are the same or different from each other.

10. An image display apparatus according to any one of claims 1 to 6, wherein the point light source is at least one of a laser light generation device, a photo diode and a fluorescent light lamp or a combination of the point light source and a pinhole member.

11. An image display apparatus according to claim 5 or 6, wherein the point light source and the point light source moving section are configured with a liquid crystal display device, the liquid crystal display device uses a combination of the point light source and a pinhole of a pinhole member as a new point light source and the liquid crystal display device can move/control the pinhole of the pinhole member.

12. An electronic spectacle using an image display apparatus according to any one of claims 1 to 11.

13. An electronic spectacle comprising:
an image display apparatus according to any one of claims 1 to 11; and
a video camera device capable of supplying a video signal to the image display apparatus.

14. An electronic spectacle according to claim 13 or 14 wherein the electronic spectacle is a portable electronic spectacle or a spectacle which can be fixed at a nose and an ear.
